(19) Europäisches Patentamt
European Patent Office
Office européen des brevets

(11) Veröffentlichungsnummer: **0 159 658**
**A2**

(12) # EUROPÄISCHE PATENTANMELDUNG

(21) Anmeldenummer: **85104631.8**

(22) Anmeldetag: **17.04.85**

(51) Int. Cl.⁴: **D 06 P 5/13**, C 09 B 67/46

(30) Priorität: **24.04.84 DE 3415304**

(43) Veröffentlichungstag der Anmeldung: **30.10.85 Patentblatt 85/44**

(84) Benannte Vertragsstaaten: **BE CH FR GB LI NL**

(71) Anmelder: **MICHAEL HUBER MÜNCHEN GMBH, Feldkirchener Strasse 15, D-8011 Kirchheim-Heimstetten (DE)**

(72) Erfinder: **Fränkel, Jürgen, Dipl.-Chem. Dr., Verdistrasse 9, D-8011 Baldham (DE)**
Erfinder: **Pfaff, Wolfgang, Beim Pfarracker 4, D-8044 Unterschleissheim (DE)**

(74) Vertreter: **Hansen, Bernd, Dr.rer.nat. et al, Hoffmann, Eitle & Partner Patentanwälte Arabellastrasse 4, D-8000 München 81 (DE)**

(54) **Wässrige Transfer-Farbstoffzubereitung.**

(57) Wässrige Transfer-Farbstoffzubereitungen enthalten neben den üblichen Bestandteilen zur Verminderung der Viskosität noch mindestens einen Komplexbildner.

## Wäßrige Transfer-Farbstoffzubereitung

Die Erfindung betrifft wäßrige Transfer-Farbstoffzubereitungen. Transfer-Farbstoffzubereitungen, insbesondere für Bedrucken von Textilien haben in jüngerer Zeit eine zunehmende Bedeutung erlangt. Solche Transfer-Farbstoffzubereitungen sollen einen hohen Anteil an in Wasser schwer- oder unlöslichen Farbstoffen, gegebenenfalls neben einem oder mehreren in Wasser schwer- oder unlöslichen optischen Aufheller(n) enthalten, wobei der Gehalt an Farbstoff wenigstens 30 Gew.-% ausmachen soll. Die Transfer-Farbstoffzubereitungen können bereits einen Verdicker enthalten oder werden vor ihrer endgültigen Verwendung durch Verdickungsmittel zur Bereitung von Druckpasten für den Transferdruck konfektioniert.

0159658

Die wesentlichen Bestandteile der bekannten wäßrigen Transfer-Farbstoffzubereitungen sind:

Wasser,
mindestens ein in Wasser schwer- oder unlöslicher Farbstoff,
gegebenenfalls ein oder mehrere in Wasser schwer- oder unlösliche optische Aufheller,
gegebenenfalls ein oder mehrere Lösungsmittel,
mindestens ein hydrotropes Mittel sowie
mindestens ein Emulgator.

Aus der DE-PS 25 20 527 sind wäßrige Transfer-Farbstoffzubereitungen bekannt, die mindestens 10 Gew.% Wasser, mindestens 30 Gew.% eines feindispersen, in Wasser unlöslichen bis schwer löslichen Farbstoffes bzw. optischen Aufhellers sowie ein Gemisch aus 0,1 bis 5 Gew.-% eines anionenaktiven Dispergiermittels und 1 bis 3 Gew.-% eines nichtionogenen Dispergiermittels sowie 5 bis 20 Gew.-% eines hydrotropen Mittels enthalten. Diese bekannten Transfer-Farbstoffzubereitungen zeichnen sich durch einen relativ kleinen Gehalt an Dispergiermitteln neben einem hohen Farbstoffgehalt aus und sind elektrolytarm, um sie auch in Kombination mit elektrolytempfindlichen Verdickungsmitteln zur Bereitung von Druckpasten einsetzen zu können.

Bei der Herstellung von Transfer-Druckfarben für den Druck von Transfer-Papier verwenden die konventionellen Textildrucker die ihnen zugelieferten Transfer-Farbstoffzubereitungen unter Zusatz

von Wasser und den erwähnten Verdickern, um die gewünschte Farbstärke und Druckviskosität zu erhalten. Der Verdicker übernimmt dabei vorrangig die Steuerung der Druckfarbenviskosität, während durch den Zusatz von Wasser die Farbstärke der Druckfarbe reguliert wird. Verdicker zur Herstellung von Transfer-Druckzubereitungen und -pasten enthalten praktisch keine Filmbildner (zum Unterschied von graphischen Transfer-Druckfarben) und ein hoher Verdickeranteil in der fertigen Transfer-Druckfarbe bedeutet eine entsprechende prozentuale Verarmung an Festkörpern in dieser. Dies bedeutet bei der Herstellung von Transfer-Papieren eine schlechte Abriebfestigkeit der Transfer-Druckfarbe auf dem hoch saugfähigen Transfer-Rohpapier, was zu Verarbeitungsschwierigkeiten (Verschmieren der Druckfarbe) und Spätfolgen bei der Lagerung so hergestellter Transferpapiere ("Migration", "Geisterbilder") führen kann.

Wäßrige Transfer-Farbstoffzubereitungen, wie sie an konventionelle Textildrucker geliefert werden, haben beispielsweise folgende Zusammensetzung:

25 bis 55 % Farbstoff,
5 bis 30 % hydrotropes Mittel (z.B. Harnstoff),
1 bis 5 % Emulgator,
10 bis 20 % organische Lösungsmittel,
10 bis 50 % Wasser.

Der hohe Anteil an Transfer-Farbstoffen macht eine Feindispergierung der Farbstoffe erforderlich. Die Wasser schwer- oder unlöslichen Farbstoffe bzw. Pigmente müssen eine extreme Feinheit aufweisen, da größere Farbstoffpartikel beim Umdruck auf das textile Substrat während des Sublimationsvorganges sich deutlich als farbstarke Pünktchen markieren.

Die Dispergierbarkeit von Transfer-Farbstoffen ist je nach ihrer chemischen Konstitution deutlich unterschiedlich. Dies hat zur Folge, daß zur Herstellung von wäßrigen Transfer-Farbstoffzubereitungen in Abhängigkeit vom eingesetzten Transfer-Farbstoff Schwankungen in der Zusammensetzung der Zubereitungen zu Stande kommen. Lagerstabile, hochfarbstoffhaltige Transfer-Farbstoffzubereitungen müssen aus verarbeitungstechnischen Gründen trotzdem gut fließfähig sein und sich aus den Liefergebinden gut zu den in Mischgefäßen vorbereiteten Verdickersystemen dosieren lassen. Sie dürfen auch bei Aufbewahrung in offenen Behältern keine Neigung zur Hautbildung oder Verkrustung (z.B. an der Behälterwand) zeigen, weil bei der späteren Verarbeitung der fertigen Druckpaste Druckstörungen, z.B. ein Verstopfen der Siebschablonen beim Siebdruck, auftreten können.

Aufgabe der Erfindung ist es, stabile wäßrige Transfer-Farbstoffzubereitungen mit einem hohen Gehalt an in Wasser schwer- oder unlöslichen Farbstoffen zur Verfügung zu stellen, die neben einem geringen Gehalt an Emulgiermitteln eine niedrige Viskosität aufweisen. Diese Aufgabe wird dadurch gelöst, daß die wäßrigen Transfer-Farbstoffzubereitungen mit einem Gehalt an:
Wasser,
mindestens einem in Wasser schwer- oder unlöslichen Farbstoff,
gegebenenfalls einem oder mehreren in Wasser schwer- oder unlöslichen optischen Aufheller(n),
gegebenenfalls einem oder mehreren Verdicker(n),
gegebenenfalls einem oder mehreren Lösungsmittel(n),
mindestens einem hydrotropen Mittel und
mindestens einem Emulgator, erfinungsgemäß zusätzlich mindestens einen Komplexbildner enthalten.

Der Komplexbildner wird vorzugsweise beim Herstellungsverfahren der Farbstoffzubereitung während des eigentlichen Dispergiervorganges zugesetzt.

Wasser ist in den Transfer-Farbstoffzubereitungen im allgemeinen in einer Menge von 8 bis 50 Gew.-% enthalten. Vorzugsweise liegt der Gehalt an Wasser bei 10 bis 25 Gew.%.

Das oder die hydrotropen Mittel sind in einer Menge von 5 bis 20 Gew.-%, vorzugsweise 10 bis 12 Gew.-% vorhanden. Hydrotrope Mittel dienen dazu, die in Wasser schwer- oder unlöslichen Farbstoffe in eine stabile entagglomerisierte Form zu überführen. Die hydrotropen Mittel sind in der Regel wasserlöslich. Geeignete hydrotrope Mittel sind insbesondere Harnstoff und dessen Derivate, wie Dimethylharnstoff oder Guanidinchlorid sowie auch

0159658

Säureamide, beispielsweise Acetamid, Propionamid oder N-Methylacetamid. Weitere hydrotrope Mittel sind aus dem Stand der Technik bekannt. Harnstoff wird als hydrotropes Mittel bevorzugt.

Der Gehalt an einem oder mehreren Emulgatoren liegt bei 3 bis 10 %, insbesondere bei 5 bis 7 %. Die Mengen an Emulgatoren werden möglichst niedrig gehalten, müssen aber für eine ausreichende Emulgierung der Farbstoffe ausreichen. Als Emulgatoren kommen sowohl anionaktive als auch nichtionogene Emulgatoren in Frage. Nichtionogene Emulgatoren sind beispielsweise partielle Ester von Polyalkoholen,z.B. Glycerinmono- und -distearate und -oleate, Sorbitmonostearat und -oleat, sowie Ethylenoxid- oder Propylenoxid-Addukte mit Fettsäuren, Fettalkoholen, Fettaminen. Weiterhin kommen auch Amide höherer Fettsäuren, z.B. Stearinsäure, Ethanolamid und dergleichen, in Frage. Solche nichtionogenen Emulgatoren sind aus dem Stand der Technik bekannt und dem Fachmann geläufig. Anionenaktive Emulgatoren sind beispielsweise Salze höherer Fettsäuren mit Alkalimetallen oder Salze von Schwefelsäureestern von Fettalkoholethern sowie Salze von Sulfonsäuren und von Alkylbenzolen und dergleichen. Auch diese anionenaktiven Emulgatoren sind dem Fachmann aus dem Stand der Technik bekannt.

Der Gehalt an organischem Lösungsmittel kann bis zu 25 Gew.%, insbesondere 5 bis 15 Gew.%, betragen. Der Gehalt wird möglichst niedrig gehalten. Geeignete organische Lösungsmittel sind solche, die mit Wasser in vollem Umfang mischbar sind, beispielsweise Ethylglykol, Diethylenglykol, Dipropylenglykol, Butyldiglykol, Hexylenglykol und Glycerin.

Der Gehalt an Farbstoffen beträgt 20 bis 60 Gew.-%. Es können alle in Wasser unlöslichen oder schwer löslichen Farbstoffe, wie sie für den Transferdruck bekannt sind, verwendet werden. Dazu gehören unter anderem Dispersionsfarbstoffe, z.B. auf Basis von Antrachinon, sowie Azoverbindungen von Naphthalinfarbstoffen und auch insbesondere basische Farbstoffe. Der Gehalt an Farbstoff wird so hoch wie möglich gehalten.

Durch den Zusatz eines Komplexbildners, der in einer Menge von 0,5 bis 6 Gew.-% und vorzugsweise 1 bis 3 Gew.-% eingesetzt wird, kann die Viskosität der Transfer-Farbstoffzubereitungen gezielt herabgesetzt werden.

Beispiele für erfindungsgemäß verwendbare Komplexbildner - wobei die Komplexbildner häufig auch als Chelatbildner bezeichnet werden - sind Aminocarbonsäure- oder Aminopolycarbonsäure-Verbindungen, z.B. Derivate der Aminocarbonsäuren und Alkylenpolyessigsäuren und insbesondere Alkylenpolyaminpolyessigsäuren, Nitrilotriessigsäure und deren löslichen Salze, wie Ethylendiamintetraessigsäure und deren Natriumsalz und Diethylentriaminpentaessigsäure und deren Natriumsalz. Bevorzugt wird das Ethylendiamintetraessigsäure-Tetranatriumsalz (Trilon B, nachfolgend als EDTA-Na abgekürzt).

Weitere Komplexbildner sind phosphororganische Verbindungen, wie Monoaminphosphonsäuren und deren Salze der Formel

$$R'_{(3-n)}-N-[R-\overset{O}{\overset{\|}{P}}-(OH)_2]_N$$

in der R eine niedere Alkylidengruppe bedeutet, R' Wasserstoff oder eine niedere Alkylgruppe bedeutet und n eine ganze Zahl von 1 bis 3 ist. Zu solchen Phosphonsäure-Komplexbildnern der obigen Formel gehören beispielsweise

$$\text{(a)}\quad N[R-\overset{O}{\overset{\|}{P}}-(OH)_2]_3$$

$$\text{(b)}\quad HN[R-\overset{O}{\overset{\|}{P}}-(OH)_2]_2$$

$$\text{(c)}\quad HN_2-R-\overset{O}{\overset{\|}{P}}-(OH)$$

in der R die angegebene Bedeutung hat und vorzugsweise 1 bis 5 Kohlenstoffatome enthält.

Auch 1-Hydroxyethyliden-1,1-diphosphonsäure

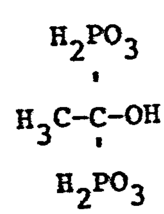

und Ethylendiamintetra(methylphosphon)säure

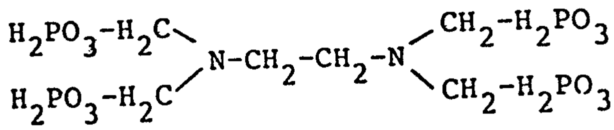

Hexamethylendiamintetra(methylphosphon)säure

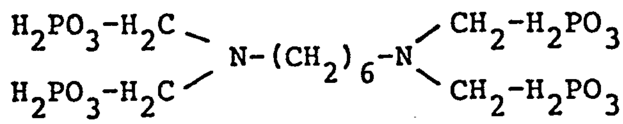

Hexamethylphosphontriamid

$[(CH_3)_2N]_3PO$

und die Verbindung

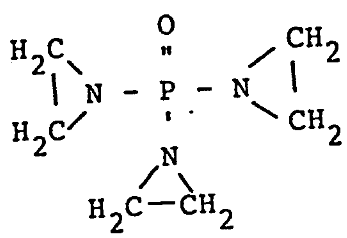

können als Komplexbildner verwendet werden. Schließlich ist es auch möglich, Gemische unterschiedlicher Komplexbildner einzusetzen.

Die nachfolgende Aufstellung zeigt die Auswirkung der Zugabe eines Komplexbildners bei einigen typischen Transfer-Farbstoffzubereitungen:

Tabelle

Fließfähigkeit

| | ohne Komplexbildner | | mit Komplexbildner | |
|---|---|---|---|---|
| | 4 mm-Auslauf-Becher nach Din 53 211 | Fluido-meter | 4 mm-Auslauf-Becher | Fluido-meter |
| Disperse Orange 25 (35 - 40 %) | ca. 3 Min. | 11 cm | ca. 1 Min. | 18 cm |
| Disperse Violett 1 (35 - 40 %) | nicht meßbar | nicht meßbar | ca. 1-7 Min. (in Abhängigkeit vom verwendeten Komplexbildnertyp) | 7-16 cm |
| Disperse Blue 26 (35 - 40 %) | nicht meßbar | 1,5 | ca. 2-6 Min. (in Abhängigkeit vom verwendeten Komplexbildnertyp) | 4-7 cm |

Erfindungsgemäß werden folgende Vorteile erzielt:

1. Der Komplexbildnerzusatz im Dispergieransatz erlaubt eine Anhebung des Transfer-Farbstoffanteiles, ohne daß dadurch die Fließfähigkeit der Farstoffpräparation vermindert wird.

2. Bei einer Reihe von Transfer-Farbstoffpräparationen kann die Fließfähigkeit, die ohne Komplexbildneranteil in der Rezeptur einen nicht oder gerade noch akzeptablen Grad erreicht, entscheidend verbessert werden.

3. Die viskositätssenkende Wirkung der Komplexbildner in den genannten Rezepturen erlaubt bei unverändertem Transfer-Farbstoffgehalt den aus verschiedenen anwendungstechnischen Gründen möglicherweise notwendigen Einbau von Additiven in die Rezeptur, die anderenfalls eine unzulässige Viskositätserhöhung bei der fertigen Farbstoffpräparation zur Folge hätten. Mit anderen Worten: Durch Mitverwendung von Komplexbildnern erweitern sich die Freiheitsgrade in der Formulierung.

4. Einige gängige Transfer-Farbstoffe neigen nach Einarbeitung in die entsprechenden Farbstoff-

0159658

präparationen zu einer deutlichen Thixotropie. Die Mitverwendung von Komplexbildnern nach den neuen Rezepturen hat einen starken, Thixotropie-abbauenden Effekt, so daß ein Viskositätsanstieg durch Thixotropie auch bei längerem Stehen der neuen Farbstoffpräparationen verhindert oder zumindest vermindert wird.

Die Erfindung wird anhand der folgenden Beispiele näher erläutert.

Beispiel 1

In eine Mischung aus 188 Teilen Wasser, 190 Teilen Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

In diese Lösung werden 110 Teile Harnstoff und 18 Teile des Tetranatriumsalzes der Ethylendiamintetraessigsäure eingetragen und unter Rühren gelöst. Zu dieser Lösung werden 380 Teile eines Dispersionsfarbstoffes (Disperse Violet 1) mit nachfolgender Formel

$C_{14}H_{10}N_2O_2$ MG=238

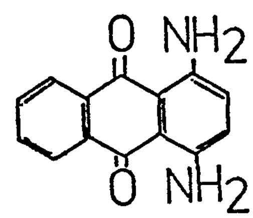

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 38 %ige Farbstoffdispersion vorliegt.

Die so erhaltene Dispersion weist eine Auslaufzeit von 410 s im 4 mm-Auslaufbecher (nach DIN 53 211) auf und ist gut fließfähig. Die Lagerstabilität dieser Farbstoffanreibung ist einwandfrei. (Eine Farbstoffanreibung ohne den Zusatz des Komplexbildners ist nicht fließfähig, die Messung einer Auslaufzeit im 4 mm-Auslaufbecher (nach DIN 53 211) nicht möglich.)

Beispiel 2

In eine Mischung aus 188 Teilen Wasser, 190 Teilen Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Zu dieser Lösung werden 110 Teile Harnstoff und 18 Teile des Dinatriumsalzes der Ethylendiamintetraessigsäure gegeben und solange gerührt, bis eine vollständige Lösung eingetreten ist. Zu dieser Lösung werden 380 Teile eines Dispersionsfarbstoffes (Disperse Violet 1) mit nachfolgender Formel

$C_{14}H_{10}N_2O_2$ MG=238

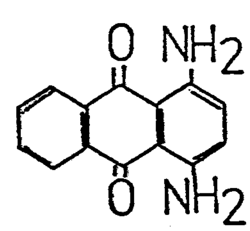

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 38 %ige Farbstoffdispersion vorliegt.

Diese Farbstoffdispersion weist eine Auslaufzeit von 130 s im 4 mm-Auslaufbecher (nach DIN 53 211) auf und ist somit gut fließfähig. Die Lagerstabilität dieser Farbstoffanreibung ist einwandfrei. (Eine Farbstoffanreibung ohne den Zusatz des Komplexbildners ist nicht fließfähig, die Messung einer Auslaufzeit im 4 mm-Auslaufbecher (nach DIN 53 211) nicht möglich.)

Beispiel 3

In eine Mischung aus 188 Teilen Wasser, 190 Teilen Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Dieser Lösung werden 110 Teile Harnstoff und 18 Teile Ethylendiamintetraessigsäure zugesetzt und solange gerührt, bis eine vollständige Lösung der zugegebenen Produkte eingetreten ist. Zu dieser Lösung werden 380 Teile eines Dispersionsfarbstoffes (Disperse Violet 1) mit nachfolgender Formel

$C_{14}H_{10}N_2O_2$ MG=238

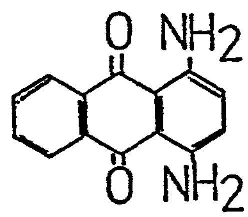

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 38 %ige Farbstoffdispersion vorliegt.

Diese Farbstoffdispersion weist eine Auslaufzeit von 190 s im 4 mm-Auslaufbecher (nach DIN 53 211) auf und ist gut fließfähig. Die Lagerstabilität dieser Farbstoffanreibung ist einwandfrei. (Eine Farbstoffanreibung ohne den Zusatz des Komplexbildners ist nicht fließfähig, die Messung einer Auslaufzeit im 4 mm-Auslaufbecher (nach DIN 53 211) nicht möglich.)

Beispiel 4

In eine Mischung aus 188 Teilen Wasser, 190 Teilen Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Zu dieser Lösung werden 110 Teile Harnstoff und 15 Teile des Trinatriumsalzes der Nitrilotriessigsäure gegeben und solange gerührt, bis eine vollständige Lösung der zugegebenen Produkte erreicht ist. Zu dieser Lösung werden 380 Teile eines Dispersionsfarbstoffes (Disperse Violet 1) mit nachfolgender Formel

$C_{14}H_{10}N_2O_2$ MG=238

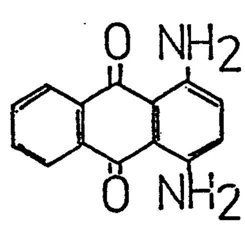

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 38 %ige Farbstoffdispersion vorliegt.

Diese Farbstoffdispersion weist eine Auslaufzeit von 340 s im 4 mm-Auslaufbecher (nach DIN 53 211) auf und ist damit fließfähig. Die Lagerstabilität dieser Farbstoffanreibung ist einwandfrei. (Eine Farbstoffanreibung ohne den Zusatz des Komplexbildners ist nicht fließfähig, die Messung einer Auslaufzeit im 4 mm-Auslaufbecher (nach DIN 53 211) nicht möglich.)

Beispiel 5

In eine Mischung aus 188 Teilen Wasser, 190 Teilen Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Dieser Mischung werden 110 Teile Harnstoff und 15 Teile Acetylaceton zugesetzt und solange gerührt, bis eine vollständige Lösung der zugesetzten Produkte eingetreten ist. Zu dieser Lösung werden 380 Teile eines Dispersionsfarbstoffes (Disperse Violet 1) mit nachfolgender Formel

$C_{14}H_{10}N_2O_2$ MG=238

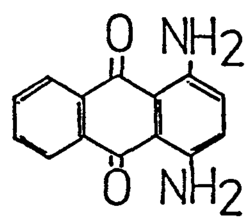

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 38 %ige Farbstoffdispersion vorliegt.

Diese Farbstoffdispersion weist eine Auslaufzeit von 127 s im 4 mm-Auslaufbecher (nach DIN 53 211) auf und ist also gut fließfähig. Die Lagerstabilität dieser Farbstoffanreibung ist einwandfrei. (Eine Farbstoffanreibung ohne den Zusatz des Komplexbildners ist nicht fließfähig, die Messung einer Auslaufzeit im 4 mm-Auslaufbecher (nach DIN 53 211) nicht möglich.)

Beispiel 6

In eine Mischung aus 188 Teilen Wasser, 190 Teilen Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Zu dieser Mischung werden 110 Teile Harnstoff und 20 Teile des Pentanatriumsalzes der Diethylentriaminopentaessigsäure gegeben und solange gerührt, bis die zugesetzten Produkte vollständig gelöst sind. Zu dieser Lösung werden 380 Teile eines Dispersionsfarbstoffes (Disperse Violet 1) mit nachfolgender Formel

$C_{14}H_{10}N_2O_2$ MG=238

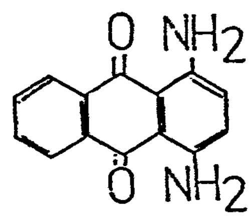

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca.3 µm aufweist. Der Mahlansatz wird mit Wasser auf 1000 Teile ergänzt, so daß eine 38 %ige Farbstoffdispersion vorliegt.

Diese Farbstoffdispersion weist eine Auslaufzeit von 82 s im 4 mm-Auslaufbecher (nach DIN 53 211) auf und ist sehr gut fließfähig. Die Lagerstabilität dieser Farbstoffanreibung ist einwandfrei. (Eine Farbstoffanreibung ohne den Zusatz des Komplexbildners ist nicht fließfähig, die Messung einer Auslaufzeit im 4 mm-Auslaufbecher (nach DIN 53 211) nicht möglich.)

Beispiel 7

In eine Mischung aus je 190 Teilen Wasser und Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Dieser Lösung werden 110 Teile Harnstoff und 18 Teile des Tetranatriumsalzes der Ethylendiamintetraessigsäure zugesetzt und solange gerührt, bis eine vollständige Lösung der zugegebenen Produkte eingetreten ist. Zu dieser Lösung werden 370 Teile des Dispersionsfarbstoffes (Disperse Blue 26) mit nachfolgender Formel

$C_{16}H_{14}N_2O_4$ MG=298

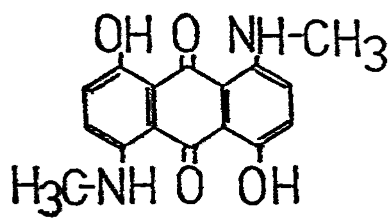

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 37 %ige Farbstoffdispersion vorliegt.

Diese Farbstoffdispersion weist eine Auslaufzeit von 330 s im 4 mm-Auslaufbecher (nach DIN 53 211) auf und ist damit noch gut fließfähig. Die Lagerstabilität dieser Farbstoffanreibung ist einwandfrei. (Eine Farbstoffanreibung ohne den Zusatz des Komplexbildners ist nicht fließfähig, die Messung einer Auslaufzeit im 4 mm-Auslaufbecher (nach DIN 53 211) nicht möglich.)

## Beispiel 8

In eine Mischung aus je 190 Teilen Wasser und Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Dieser Lösung werden 110 Teile Harnstoff und 20 Teile des Pentanatriumsalzes der Diethylentriaminopentaessigsäure zugesetzt und solange gerührt, bis eine vollständige Lösung der zugegebenen Produkte eingetreten ist. Zu dieser Lösung werden 370 Teile des Dispersionsfarbstoffes (Disperse Blue 26) mit nachfolgender Formel

$C_{16}H_{14}N_2O_4$ MG=298

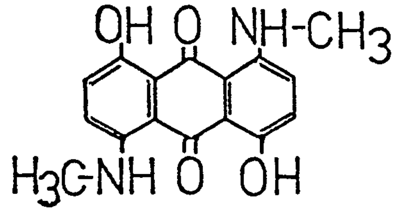

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 37 %ige Farbstoffdispersion vorliegt.

Die Viskosität dieser Anreibung entspricht einer Laufstrecke von 3.5 cm auf der Viskositätsmeßrinne. (Eine Anreibung nach gleicher Rezeptur, ohne Mitverwendung des Komplexbildners, weist lediglich eine Laufstraße von 1 cm auf der Viskositätsmeßrinne auf.)

Beispiel 9

In eine Mischung aus 310 Teilen Wasser und 190 Teilen Diethylenglykol und 2 Teilen Konservierungsmittel gibt man 70 Teile eines Acylpolyglykolethers und rührt bis zu dessen vollständiger Lösung. Bei Bedarf kann etwas Entschäumer zugesetzt werden.

Zu dieser Lösung gibt man 18 Teile des Tetranatriumsalzes der Ethylendiamintetraessigsäure und rührt bis zu dessen vollständiger Lösung. Zu dieser Lösung werden 350 Teile des Dispersionsfarbstoffes (Disperse Orange 25) mit nachfolgender Formel

$C_{17}H_{17}N_5O_2$ MG=323

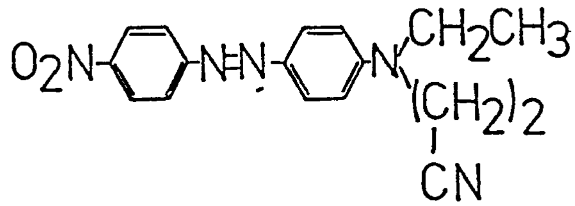

unter sehr intensivem Rühren zugegeben.

Nachdem der Farbstoff in der vorgelegten Mischung weitgehend homogenisiert ist, wird in einem geschlossenen Dispergieraggregat (z.B. einer sog. Perlmühle) solange dispergiert, bis der Hauptteil der Farbstoffpartikel eine Korngröße von ca. 3 µm aufweist. Der Mahlansatz wird mit Wasser auf 1000 Teile ergänzt, so daß eine 35 %ige Farbstoffdispersion vorliegt.

Die so erhaltene Farbstoffdispersion weist eine Auslaufzeit von 61 s im 4 mm-Auslaufbecher (nach DIN 53 211) auf und ist somit gut fließfähig. Die Lagerstabilität der so hergestellten Farbstoffdispersion ist ebenfalls einwandfrei (ohne Zusatz des Komplexbildners wurde bei sonst gleicher Rezeptur lediglich eine Auslaufzeit von 173 s erhalten).

## Patentansprüche

1. Wäßrige Transfer-Farbstoffzubereitung mit einem Gehalt an:

Wasser,
mindestens einem in Wasser schwer- oder unlöslichen Farbstoff,
gegebenenfalls einem oder mehreren in Wasser schwer- oder unlöslichen optischen Aufheller(n),
gegebenenfalls einem oder mehreren Verdicker(n),
gegebenenfalls einem oder mehreren Lösungsmittel(n),
mindestens einem hydrotropen Mittel und
mindestens einem Emulgator,
dadurch gekennzeichnet, daß sie zusätzlich zur Verminderung der Viskosität mindestens einen Komplexbildner enthält.

2. Wäßrige Transfer-Farbstoffzubereitung gemäß Anspruch 1, dadurch gekennzeichnet, daß der Gehalt an Farbstoffen 20 bis 60 Gew.-% beträgt.

3. Wäßrige Transfer-Farbstoffzubereitung gemäß Ansprüchen 1 oder 2, dadurch gekennzeichnet, daß sie das hydrotrope Mittel in einer Menge von 5 bis 20 Gew.-% enthält.

4. Wäßrige Transfer-Farbstoffzubereitung gemäß Anspruch 3, dadurch gekennzeichnet, daß das hydrotrope Mittel in einer Menge von 10 bis 12 Gew.-% vorhanden ist.

5. Wäßrige Transfer-Farbstoffzubereitung gemäß Ansprüchen 3 oder 4, dadurch gekennzeichnet, daß das hydrotrope Mittel Harnstoff oder ein Harnstoffderivat ist.

6. Wäßrige Transfer-Farbstoffzubereitung gemäß einem der vorhergehenden Ansprüche, dadurch gekennzeichnet, daß der Gehalt an Emulgatoren 3 bis 10 Gew.-% beträgt.

7. Wäßrige Transfer-Farbstoffzubereitung gemäß Anspruch 6, dadurch gekennzeichnet, daß der Gehalt an Emulgatoren 5 bis 7 Gew.-% beträgt.

8. Wäßrige Transfer-Farbstoffzubereitung gemäß einem der vorhergehenden Ansprüche, dadurch gekennzeichnet, daß das organische Lösungsmittel in einer Menge bis zu 25 Gew.-% vorliegt.

9. Wäßrige Transfer-Farbstoffzubereitung gemäß Anspruch 8, dadurch gekennzeichnet, daß das organische Lösungsmittel in einer Menge von 5 bis 15 Gew.-% vorliegt.

10. Wäßrige Transfer-Farbstoffzubereitung gemäß einem der vorhergehenden Ansprüche, dadurch gekennzeichnet, daß der Komplexbildner in einer Menge von 0,5 bis 6 Gew.-% vorliegt.

11. Wäßrige Transfer-Farbstoffzubereitung gemäß Anspruch 10, dadurch g e k e n n z e i c h - n e t , daß der Komplexbildner in einer Menge von 1 bis 3 Gew.-% vorliegt.

12. Wäßrige Transfer-Farbstoffzubereitung gemäß Anspruch 11, dadurch g e k e n n z e i c h - n e t , daß der wäßrige Komplexbildner Ethylendiamintetraessigsäure-tetranatriumsalz ist.